# EUROPÄISCHE PATENTSCHRIFT

(11) **EP 4 017 765 B1**
(45) Veröffentlichungstag und Bekanntmachung des Hinweises auf die Patenterteilung: **17.07.2024**
(21) Anmeldenummer: 20764304.0
(22) Anmeldetag: 12.08.2020
(51) Int. Cl.: B60R 11/04, G01S 7/481, G01S 13/86, G01S 13/931, G01S 17/931

(54) **DACHMODUL ZUR BILDUNG EINES FAHRZEUGDACHS MIT TRÄGERMODUL**
ROOF MODULE FOR FORMING A VEHICLE ROOF WITH CARRIER MODULE
MODULE DE TOIT POUR FORMER UN TOIT DE VÉHICULE DOTÉ D'UN MODULE DE SUPPORT

(30) Priorität: 19.08.2019 DE 102019122197
(43) Veröffentlichungstag der Anmeldung: 29.06.2022
(73) Patentinhaber: Webasto SE, 82131 Stockdorf (DE)
(72) Erfinder: HUELSEN, Michael, 82131 Stockdorf (DE); LANGLAIS, Cédric, 82131 Stockdorf (DE); MAILHAMER, Michael, 82131 Stockdorf (DE); LEHOTSKY, Juraj, 82131 Stockdorf (DE)
(74) Vertreter: advotec.
(86) Internationale Anmeldenummer: PCT/EP2020/072598
(87) Internationale Veröffentlichungsnummer: WO 2021/032559

(56) Entgegenhaltungen:
- EP-A1- 3 514 487
- WO-A1-03/093061
- DE-A1- 102016 123 752
- DE-A1- 102017 104 988
- JP-A- 2012 232 679
- US-A1- 2018 037 267

## Beschreibung

Die Erfindung betrifft ein Dachmodul zur Bildung eines Fahrzeugdachs an einem Kraftfahrzeug nach dem Oberbegriff des Anspruchs 1.

Gattungsgemäße Dachmodule finden im Fahrzeugbau breite Verwendung, da diese Dachmodule als separate Funktionsmodule vorgefertigt und bei der Montage des Fahrzeuges an das Montageband geliefert werden können. Bei dem Dachmodul kann es sich dabei entweder um ein Teil eins starren Fahrzeugdachs handeln oder um ein Teil einer öffenbaren Dachbaugruppe.

Im Fahrzeugbau finden autonom bzw. teilautonom fahrende Kraftfahrzeuge immer weitere Verbreitung. Um in der Fahrzeugsteuerung ein autonomes bzw. teilautonomes bzw. fahrerunterstützendes Steuern des Kraftfahrzeuges zu ermöglichen, sind eine Vielzahl von Umfeldsensoren notwendig, die die Umgebung des Kraftfahrzeuges erfassen und daraus die jeweilige Verkehrssituation ermitteln. Die bekannten Umfeldsensoren senden bzw. empfangen dazu entsprechende elektromagnetische Signale, beispielsweise Laserstrahlen oder Radarstrahlen, wobei durch eine entsprechende Signalauswertung ein Datenmodell der Fahrzeugumgebung generiert werden kann.

Um die Umfeldsensoren vor schädlichen Umwelteinflüssen, beispielsweise Feuchtigkeit und Luftströmungen, zu schützen, sind die bekannten Umfeldsensoren in ein entsprechendes Sensorgehäuse eingebaut. Dieses Sensorgehäuse wird auf der Oberseite des Fahrzeugdachs befestigt, um den Umfeldsensor eine möglichst hochgelegene Beobachtungsposition zu bieten. Nachteilig an der Befestigung des Umfeldsensors zusammen mit einem Sensorgehäuse auf dem Fahrzeugdach ist es, dass dadurch sowohl die aerodynamischen Eigenschaften als auch das Design des Fahrzeuges nachteilig beeinflusst werden. Außerdem erfordert die Befestigung der Sensorgehäuse auf dem Fahrzeugdach eine sehr hohe Präzision, um die Funktionalität der Umfeldsensoren bei der Erfassung der Fahrzeugumgebung zu sichern. Die hochpräzise Fixierung des Sensorgehäuses auf dem Fahrzeugdach ist deshalb zeit- und kostenaufwändig.

Aus Druckschrift US 2018/0037267 A1, die den Oberbegriff des Anspruchs 1 zeigt, ist ein Fahrzeugdach mit einer Blende bekannt, unter der ein Umfeldsensor angeordnet ist, der in einer Wanne liegt.

Druckschrift EP 3 514 487 A1 offenbart ein Sensorsystem für ein Kraftfahrzeug, umfassend einen Lidar-Sensor.

Druckschrift DE 10 2017 104 988 A1 zeigt einen Dachsensor eines Fahrzeugs, der ein säulenartiges Gehäuse hat.

Aufgabe der vorliegenden Erfindung ist es deshalb, ein neues Dachmodul vorzuschlagen, das die oben beschriebenen Nachteile des vorbekannten Standes der Technik vermeidet.

Diese Aufgabe wird durch ein Dachmodul nach der Lehre des Anspruchs 1 gelöst. Vorteilhafte Ausführungsformen der Erfindung sind Gegenstand der Unteransprüche. Bei dem erfindungsgemäßen Dachmodul wird der Umfeldsensor unter der Dachhaut befestigt. Zur Befestigung des Umfeldsensors am Dachmodul unterhalb der Dachhaut dient dabei ein Trägermodul. Durch die Vormontage des Umfeldsensors auf dem Trägermodul wird eine exakte Positionierung des Umfeldsensors problemlos gewährleistet. Außerdem wird der Einbau der Umfeldsensoren in das Dachmodul erheblich vereinfacht, da dazu lediglich das Trägermodul mit dem darauf vormontierten Umfeldsensor im Dachmodul befestigt werden muss. Eine Einzeljustierung des Umfeldsensors im Dachmodul entfällt auf diese Weise. Stattdessen muss lediglich das Trägermodul exakt im Dachmodul ausgerichtet werden. Im Falle einer Funktionsstörung kann das gesamte Trägermodul mit dem darauf befestigten Umfeldsensor in einfacher Weise demontiert und gegebenenfalls ausgetauscht werden.

Bevorzugt können auf dem Trägermodul mehrere Umfeldsensoren gemeinsam befestigt sein. Durch die gemeinsame Befestigung der Umfeldsensoren auf dem Trägermodul können die Umfeldsensoren in definierter Position auf dem Trägermodul vormontiert werden.

Um die Positionierung des Trägermoduls relativ zum Dachmodul und damit relativ zur Fahrzeugkarosserie bei der Montage des Trägermoduls zu vereinfachen, ist es besonders vorteilhaft, wenn die Befestigungselemente zur Befestigung des Trägermoduls im Dachmodul mit Justiereinrichtungen ausgestattet sind. Eine solche Justiereinrichtung kann beispielsweise in der Art von Langlöchern im Trägermodul ausgebildet werden. Durch die Justiereinrichtung kann das Trägermodul nach einer Vorfixierung exakt ausgerichtet und anschließend durch Betätigung der Befestigungselemente im Dachmodul fixiert werden. Insbesondere beim Austausch von Trägermodulen ist dies von großem Vorteil.

Beim Betrieb von bekannten Umfeldsensoren kann es zur Entstehung von Abwärme kommen, durch die die Funktion der Umfeldsensoren beeinträchtigt werden könnte. Gleichzeitig kann die Funktion der Umfeldsensoren auch durch zu tiefe Temperaturen, beispielsweise bei Eis und Schnee, beeinträchtigt werden. Um die Funktion der Umfeldsensoren in allen Temperaturbereichen zu sichern, ist es deshalb besonders vorteilhaft, wenn am Trägermodul zusätzlich zu den Umfeldsensoren auch eine Heiz- und/oder Kühleinrichtung befestigt ist. Mit dieser Heiz- und/oder Kühleinrichtung kann dann ein Thermomanagement realisiert werden, um die Betriebstemperatur der Umfeldsensoren in einem zulässigen Temperaturband zu halten.

Welche Art von Heizelementen oder Kühlelementen am Dachmodul befestigt werden kann, ist grundsätzlich beliebig. Besonders einfache Bauformen ergeben sich, wenn zur Kühlung der Umfeldsensoren bzw. zur Ableitung der von den Umfeldsensoren abgegebenen Abwärme über das Trägermodul ein Kühllüfter und/oder ein Luftkühlkörper vorgesehen sind.

Alternativ bzw. additiv dazu kann die Heiz- und/oder Kühleinrichtung auch einen Flüssigkeitskörper oder einen Flüssigkeitskühlkörper umfassen.

Für den Betrieb von Fahrzeugen, insbesondere von autonom betriebenen Fahrzeugen, ist vielfach eine Funkkommunikation erforderlich, um beispielsweise Informationen mit vorausfahrenden Fahrzeugen oder nachfolgenden Fahrzeugen auszutauschen. Auch ist Funkkommunikation für die Übermittlung von Radio- oder Positionssignalen erforderlich Um solche Art Funkkommunikation durch Senden und Empfangen von Funksignalen realisieren zu können, ist der Einbau von Antennenmodulen in das Fahrzeug erforderlich. Die Antennen müssen dabei so am Fahrzeug positioniert werden, dass durch andere Bestandteile des Fahrzeuges die Funksignale nicht abgeschattet werden. Da die Umfeldsensoren im Dachmodul regelmäßig am höchsten Punkt des Fahrzeuges angeordnet sind, ist dieser Platz besonders geeignet, zusätzlich auch ein Antennenmodul aufzunehmen. Gemäß einer bevorzugten Ausführungsform ist es deshalb vorgesehen, dass an dem Trägermodul neben den Umfeldsensoren auch ein Antennenmodul befestigt ist. Mit diesem Antennenmodul kann dann eine Funkkommunikation mit Sendern bzw. Empfängern außerhalb des Fahrzeuges bzw. mit Sendern und Empfängern innerhalb des Fahrzeuges aufgebaut werden.

Beim Betrieb von Kraftfahrzeugen in einem autonomen Betriebsmodus, in dem das Fahrzeug nicht von einem Fahrer, sondern von der Fahrzeugsteuerung gesteuert wird, ist es vielfach vorgeschrieben, dass dieser Betriebsmodus durch eine Signalisierungseinrichtung (ADS-Leuchte) signalisiert wird. Zur Einsparung von Kosten ist es dabei besonders vorteilhaft, wenn diese Signalisierungseinrichtung an dem Trägermodul zur Befestigung der Umfeldsensoren befestigt wird. Auf separaten Befestigungsmittel zur Befestigung der Signalisierungseinrichtung am Fahrzeug kann auf diese Weise verzichtet werden.

In welcher Weise die verschiedenen Bestandteile, insbesondere die Umfeldsensoren, die Heiz- und/oder Kühleinrichtung, das Antennenmodul und/oder die Signalisierungseinrichtung am Trägermodul befestigt werden, ist grundsätzlich beliebig. Um eine exakte Relativpositionierung der unterschiedlichen Bauteile am Trägermodul zu gewährleisten, ist es vorteilhaft, wenn das Trägermodul mehrere Befestigungsaufnahmen umfasst. In den einzelnen Befestigungsaufnahmen kann dann jeweils ein Umfeldsensor, die Heiz- und/oder Kühleinrichtung, ein Antennenmodul und/oder eine Signalisierungseinrichtung in definierter Position relativ zueinander vormontiert werden. Dies bedeutet mit anderen Worten, dass alle am Trägermodul zu befestigenden Funktionselemente in den dafür jeweils vorgesehenen Befestigungsaufnahmen vormontiert werden.

Für die Befestigung des Trägermoduls am Fahrzeug gibt es verschiedenste Möglichkeiten. Besonders preisgünstig und einfach gelingt dies dadurch, dass das Trägermodul mit den daran vormontierten Umfeldsensoren an einem Rahmenelement oder an einem Rohbauelement oder an einem die Dachhaut des Fahrzeuges bildenden Flächenbauteil befestigt wird. Dadurch wird die notwendige mechanische Stabilität problemlos erreicht. Außerdem kann über diese in der Regel aus Metall gefertigten Bauteile auch Abwärme vom Trägermodul abgeführt werden, um dadurch das Thermomanagement entsprechend zu verbessern.

Im Hinblick auf einen optimalen Schutz der am Trägermodul befestigten Funktionselemente, insbesondere der Umfeldsensoren, ist es gemäß einer bevorzugten Ausführungsform vorgesehen, dass das Trägermodul in einer vor Feuchtigkeit geschützten Trockenabteilung des Dachmoduls angeordnet ist.

Soweit das Trägermodul in einer Trockenabteilung angeordnet ist, kann die anfallende Abwärme nicht in einfacher Weise unmittelbar aus der Trockenabteilung abgeleitet werden, da beispielsweise ein Kühllüfter in der Trockenabteilung nicht betrieben werden kann. Zur Lösung dieses Problems kann das Dachmodul zusätzlich ein Wärmeleitelement umfassen. Mit diesem Wärmeleitelement kann dann Wärme vom Trägermodul abgeleitet und in einen Bereich geführt werden, wo die Abwärme problemlos abgeführt werden kann.

Welche Art von Wärmeleitelement für die Wärmeleitung genutzt wird, ist grundsätzlich beliebig. Besonders einfach und kostengünstig kann dies realisiert werden, wenn das Wärmeleitelement in der Art eines Blechteils ausgebildet ist.

Insbesondere können Trägerbleche, die beispielsweise zur Befestigung des Dachmoduls an der Fahrzeugkarosserie dienen, zugleich auch als Wärmeleitelement zur Wärmeabfuhr genutzt werden.

Soweit am Trägermodul zwei Umfeldsensoren mit optischem Funktionsprinzip befestigt sind, muss der Einfall von Streulicht in diese Umfeldsensoren vermieden werden. In einfacher Weise kann dies dadurch realisiert werden, wenn das Trägermodul eine Streulichtblende umfasst, die den Einfall von Streulicht in die Umfeldsensoren verhindert.

Welche Art von Umfeldsensoren an dem Trägermodul befestigt werden, ist grundsätzlich beliebig. Besonders große Vorteile bietet das Trägermodul bei Umfeldsensoren, die in der Art eines LIDAR-Sensors und/oder in der Art eines Radar-Sensors und/oder in der Art eines Kamera-Sensors und/oder in der Art eines Multi-Kamera-Sensors ausgebildet sind.

Grundsätzlich kann das Dachmodul nach der Erfindung sowohl bei Personenkraftwagen als auch bei Nutzfahrzeugen, wie Lieferwägen oder Zugmaschinen für LKW, zum Einsatz kommen. Es kann als reines Festdach ausgebildet sein oder auch mit einem Dachöffnungssystem versehen sein und damit eine verschließbare Dachöffnung ausbilden.

Des Weiteren bildet das Dachmodul nach der Erfindung eine Baueinheit, die in integrierter Weise Einrichtungen zum autonomen Fahren oder zum teilautonomen, durch Fahrzeugassistenzsysteme unterstützten Fahren umfasst und die auf Seiten eines Fahrzeugherstellers auf einen Fahrzeugrohbau aufsetzbar ist.

Die Erfindung hat auch ein Kraftfahrzeug mit einem Dachmodul der vorstehend beschriebenen Art zum Gegenstand.

Verschiedene Ausführungsformen der Erfindung sind in den Zeichnungen schematisiert dargestellt und werden nachfolgend beispielhaft erläutert. Es zeigt:
- Figur 1: ein Dachmodul mit einem Trägermodul zur Befestigung mehrerer Umfeldsensoren im schematisierten Längsschnitt;
- Figur 2: das Trägermodul des Dachmoduls gemäß Figur 1 in perspektivischer seitlicher Ansicht;
- Figur 3: das Trägermodul gemäß Figur 2 in Ansicht von vorne;
- Figur 4: das Trägermodul gemäß Figur 2 in Ansicht von oben;
- Figur 5: das Trägermodul gemäß Figur 2 nach der Demontage aller Funktionselemente in perspektivischer seitlicher Ansicht;
- Figur 6: das Trägermodul gemäß Figur 5 in Ansicht von vorne;
- Figur 7: das Trägermodul gemäß Figur 5 in Ansicht von oben;
- Figur 8: eine zweite Ausführungsform eines Trägermoduls zur Fixierung mehrerer Funktionselemente in perspektivischer seitlicher Ansicht;
- Figur 9: das Trägermodul gemäß Figur 8 in seitlicher Ansicht;
- Figur 10: das Trägermodul gemäß Figur 8 in Ansicht von vorne; und
- Figur 11: eine dritte Ausführungsform eines Trägermoduls zur Befestigung mehrerer Funktionselemente.

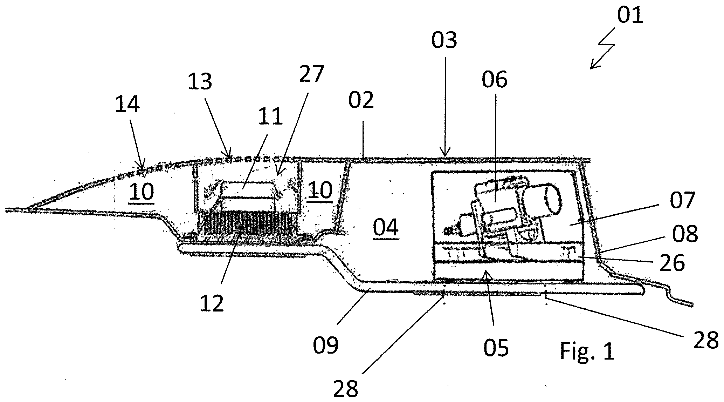

Figur 1 zeigt ein Dachmodul 01 zur Befestigung auf dem Fahrzeugdach eines Kraftfahrzeuges, um einen autonomen bzw. teilautonomen Betrieb des Kraftfahrzeuges zu ermöglichen. Das Dachmodul 01 umfasst ein Flächenbauteil 02, dessen Außenseite einen Teil der Dachhaut 03 des Fahrzeuges bildet. Im Inneren des Dachmoduls 01 ist eine Trockenabteilung 04 gebildet, in der ein Trägermodul 05 befestigt ist. Auf dem Trägermodul 05 sind zwei seitliche Umfeldsensoren 06 und ein mittlerer Umfeldsensor 07 vormontiert befestigt. Unter dem mittlerer Umfeldsensor 07 befindet sich ein Kühlkörper 26. Der Kühlkörper 26 umfasst einen Flüssigkeitskühlkörper, der die von den Umfeldsensoren 06 erzeugte Abwärme aufnimmt und ableitet. Im Bereich vor den Umfeldsensoren 06 befindet sich am Dachmodul 01 eine Abdeckung 08, die beispielsweise aus Kunststoff besteht und für die von den Umfeldsensoren 06 abgegebenen elektronmagnetischen Strahlungen, beispielsweise Laserstrahlen oder Radarstrahlen, durchlässig ist.

Das Trägermodul 05 ist mit Befestigungsschrauben 28 auf einem Trägerblech 09 befestigt, das Teil der mechanischen Struktur des Dachmoduls 01 ist. Auf diese Weise dient das Trägerblech 09 zum einen der mechanischen Befestigung des Trägermoduls 05. Zum anderen kann die vom Kühlkörper 26 aufgenommene Abwärme im Trägerblech 09 aus der Trockenabteilung 04 zu einer Kühleinrichtung 27 in einen Feuchtigkeitsbereich 10 abgeleitet werden. Auf diese Weise dient also das Trägerblech 09 auch als Wärmeleitelement. Soweit die Wärmeleitfähigkeit des Trägerblechs 09 nicht ausreicht, kann am Trägerblech 09 zusätzlich eine Heatpipe vorgesehen werden. Im Feuchtigkeitsbereich 10 befindet sich die Kühleinrichtung 27 mit einem Kühllüfter 11, der mit einem Kühlkörper 12 zur Abfuhr der Abwärme zusammenwirkt. Der Kühllüfter 11 kann Frischluft durch Ausnehmungen 13 ansaugen. Die Frischluft wird dann beim Überstreichen des Kühlkörpers 12 erwärmt und wird durch Ausnehmungen 14 wieder ausgeblasen.

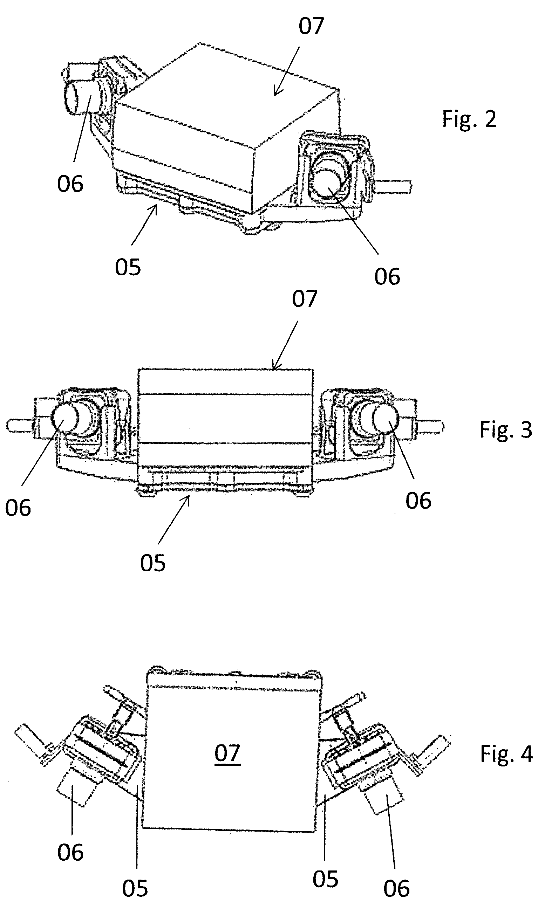

Figur 2 zeigt das Trägermodul 05 mit den beiden Umfeldsensoren 06 und der dazwischen angeordneten Umfeldsensoren 07 in perspektivischer Ansicht. Durch die Vormontage der Umfeldsensoren 06 und 07 wird eine exakte Positionierung insbesondere der Umfeldsensoren 06 und 07 relativ zueinander realisiert. Außerdem kann bei einer Störung der Umfeldsensoren 06 und 07 das gesamte Trägermodul 05 sehr schnell und einfach ausgetauscht wird.

Figur 3 und Figur 4 zeigen das Trägermodul 05, die beiden Umfeldsensoren 06 und 07 in Ansicht von vorne bzw. in Ansicht von oben.

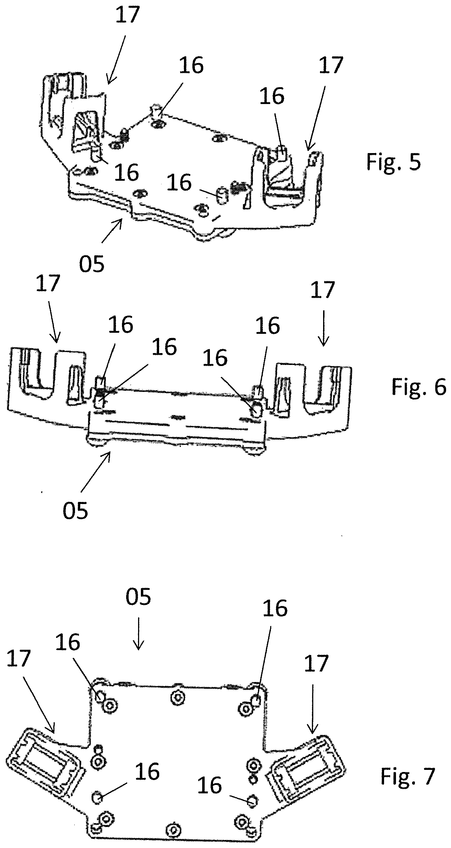

Figur 5 bis Figur 6 zeigen das Trägermodul 05 in perspektivischer Ansicht, in seitlicher Ansicht und in Ansicht von oben. Alle Funktionselemente, das heißt die drei Umfeldsensoren 06 und 07 sind dabei demontiert. der Umfeldsensor 07 wird auf der Oberseite einer Grundplatte 15 befestigt, die den Kühlkörper 26 umfasst. Auf der Oberseite der Grundplatte 15 sind Justierbolzen 16 vorgesehen, die eine exakte Positionierung des Umfeldsensors 07 auf der Grundplatte 15 gewährleisten. An beiden Seiten der Grundplatte 15 sind zwei Befestigungsaufnahmen 17 vorgesehen, in denen jeweils ein Umfeldsensor 06 in exakter Position vormontiert werden.

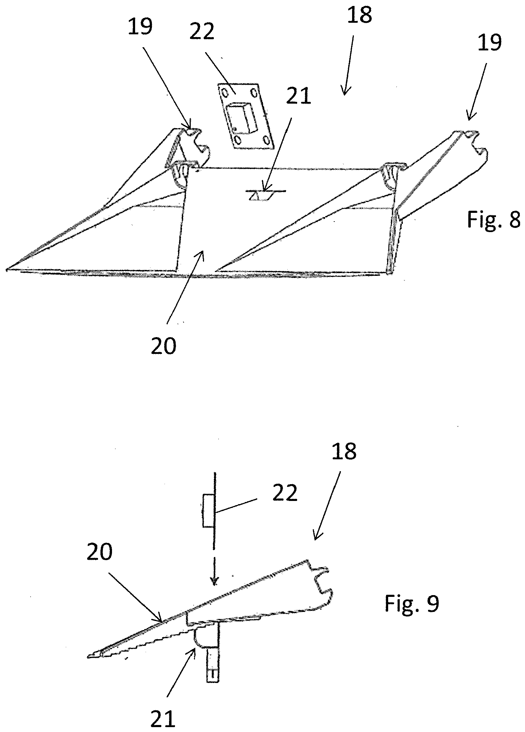

Figur 8 bis Figur 10 zeigen eine zweite Ausführungsform eines Trägermoduls 18, das ebenfalls zur Befestigung in einem Dachmodul vorgesehen ist. Das Trägermodul 18 umfasst zwei Befestigungsaufnahmen 19, an denen jeweils ein Umfeldsensor in präziser Relativpositionierung befestigt werden kann. Zwischen den beiden Befestigungsaufnahmen 19 ist eine Streulichtblende 20 vorgesehen. An der Oberseite der Streulichtblende 20 kann in einer Befestigungsaufnahme 21 ein Antennenmodul 22 fixiert werden.

Figur 9 zeigt das Einstecken des Antennenmoduls 22 von oben in die Befestigungsaufnahme 21.

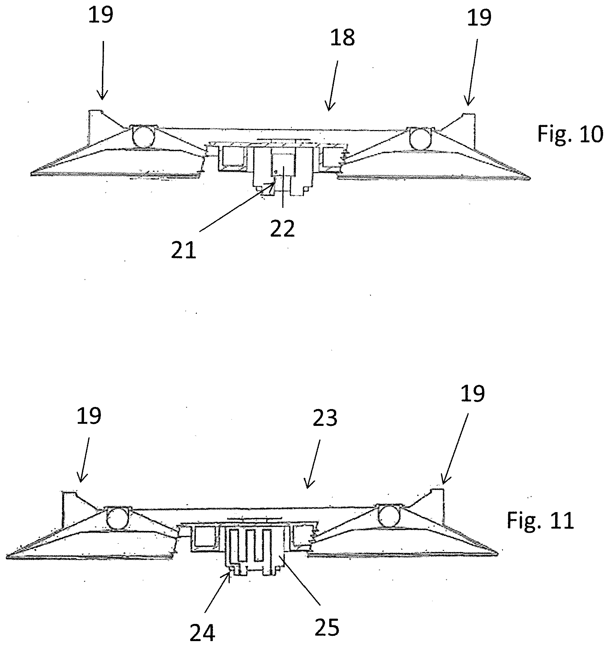

Figur 10 zeigt das Trägermodul 18 mit dem daran befestigten Antennenmodul 22 in der Befestigungsaufnahme 21. Das Trägermodul 18 ist dabei im Teilschnitt unter Weglassung eines Teils der Streulichtblende 20 dargestellt.

Figur 11 zeigt eine weitere Ausführungsform eines Trägermoduls 23. Das Trägermodul 23 stimmt dabei weitgehend mit dem Trägermodul 18 überein. Im Unterscheid zum Trägermodul 18 wird jedoch ein Antennenmodul 24 im Bereich unterhalb der Streulichtblende 20 auf einen Aufnahmefläche 25 aufgedruckt, so dass die Befestigungsaufnahme 21 entfällt.

### Bezugszeichenliste

- 01: Dachmodul
- 02: Flächenbauteil
- 03: Dachhaut
- 04: Trockenabteilung
- 05: Trägermodul
- 06: Umfeldsensor
- 07: Umfeldsensor
- 08: Abdeckung
- 09: Trägerblech
- 10: Feuchtigkeitsbereich
- 11: Kühllüfter
- 12: Kühlkörper
- 13: Ausnehmung
- 14: Ausnehmung
- 15: Grundplatte
- 16: Justierbolzen
- 17: Befestigungsaufnahme
- 18: Trägermodul
- 19: Befestigungsaufnahme
- 20: Streulichtblende
- 21: Befestigungsaufnahme
- 22: Antennenmodul
- 23: Trägermodul
- 24: Antennenmodul
- 25: Aufnahmefläche
- 26: Kühlkörper
- 27: Kühleinrichtung
- 28: Befestigungsschraube

## Patentansprüche

1. Dachmodul (01) zur Bildung eines Fahrzeugdachs an einem Kraftfahrzeug, wobei das Dachmodul (01) eine Baueinheit bildet, die in integrierter Weise Einrichtungen zum autonomen Fahren oder teilautonomen Fahren umfasst und auf einen Fahrzeugrohbau aufsetzbar ist, umfassend ein Flächenbauteil (02), dessen Außenoberfläche zumindest bereichsweise die Dachhaut (03) des Fahrzeugdachs bildet, und zumindest zwei Umfeldsensoren (06, 07), die zur Erfassung der Fahrzeugumgebung elektromagnetische Signale senden und/oder empfangen können, und die unter der vom Flächenbauteil (02) gebildeten Dachhaut (03) angeordnet sind, sowie zumindest ein Trägermodul (05, 18, 23), auf dem die zumindest zwei Umfeldsensoren (06, 07) befestigt sind, **dadurch gekennzeichnet, dass** das Trägermodul (05, 18, 23) an einem Rahmenelement befestigt ist und eine Grundplatte (15) aufweist, an der an beiden Seiten zwei Befestigungsaufnahmen (17) vorgesehen sind, in denen jeweils einer der Umfeldsensoren (06, 07) vormontiert ist.

2. Dachmodul nach Anspruch 1, **dadurch gekennzeichnet, dass** an dem Trägermodul zumindest zwei Umfeldsensoren (06, 07) gemeinsam befestigt sind.

3. Dachmodul nach Anspruch 1 oder 2, **dadurch gekennzeichnet, dass** das Trägermodul (05, 18, 23) zumindest ein Befestigungselement aufweist, mit dem das Trägermodul (05, 18, 23) am Dachmodul (01) befestigbar ist, wobei das Befestigungselement eine Justiereinrichtung aufweist, mit der die Relativposition des Trägermoduls (05, 18, 23) am Dachmodul (01) justierbar ist.

4. Dachmodul nach einem der Ansprüche 1 bis 3, **dadurch gekennzeichnet, dass** an dem Trägermodul (05, 18, 23) zumindest ein Teil einer Heiz- und/oder Kühleinrichtung (27) befestigt ist.

5. Dachmodul nach Anspruch 4, **dadurch gekennzeichnet, dass** die Heiz- und/oder Kühleinrichtung (27) einen Kühllüfter (11) und/oder zumindest einen Kühlkörper (12, 26) umfasst.

6. Dachmodul nach Anspruch 4 oder 5, **dadurch gekennzeichnet, dass** die Heiz- und/oder Kühleinrichtung einen Flüssigkeitsheizkörper oder einen Flüssigkeitskühlkörper umfasst.

7. Dachmodul nach einem der Ansprüche 1 bis 6, **dadurch gekennzeichnet, dass** auf dem Trägermodul (18, 23) zusätzlich ein Antennenmodul (22, 24) befestigt ist.

8. Dachmodul nach einem der Ansprüche 1 bis 7, **dadurch gekennzeichnet, dass** auf dem Trägermodul zusätzlich eine Signalisierungseinrichtung zur Signalisierung eines autonomen Betriebsmodus des Kraftfahrzeugs befestigt ist.

9. Dachmodul nach einem der Ansprüche 1 bis 8, **dadurch gekennzeichnet, dass** das Trägermodul (05, 18, 23) mehrere Befestigungsaufnahmen (17, 19, 21) umfasst, an denen die Umfeldsensoren (06, 07) und/oder die Heiz- und/oder Kühleinrichtung und/oder das Antennenmodul (22) und/oder die Signalisierungseinrichtung in einer definierten Position relativ zueinander vormontierbar sind.

10. Dachmodul nach einem der Ansprüche 1 bis 9, **dadurch gekennzeichnet, dass** das Trägermodul (05, 18, 23) mit den vormontierten Umfeldsensoren an einem Rohbauelement oder an einem die Dachhaut eines Fahrzeugs bildenden Flächenbauteil oder an einem Trägerblech (09) befestigbar ist.

11. Dachmodul nach einem der Ansprüche 1 bis 10, **dadurch gekennzeichnet, dass** das Trägermodul (05, 18, 23) in einer vor Feuchtigkeit geschützten Trockenabteilung (04) des Dachmoduls (01) angeordnet ist.

12. Dachmodul nach einem der Ansprüche 1 bis 11, **dadurch gekennzeichnet, dass** das Dachmodul (05, 18, 23) ein Wärmeleitelement umfasst, wobei mit dem Wärmeleitelement Wärme vom Trägermodul (05, 18, 23) abgeleitet werden kann, wobei das Wärmeleitelement vorzugsweise in der Art eines Blechteils ausgebildet ist, welches insbesondere in der Art eines Trägerblechs (09) ausgebildet ist.

13. Dachmodul nach einem der Ansprüche 1 bis 12, **dadurch gekennzeichnet, dass** das Trägermodul (18, 23) eine Streulichtblende (20) zwischen den beiden Umfeldsensoren umfasst.

14. Dachmodul nach einem der Ansprüche 1 bis 13, **dadurch gekennzeichnet, dass** der Umfeldsensor (06, 07) in der Art eines Lidar-Sensors und/oder in der Art eines Radar-Sensors und/oder in der Art eines Kamera-Sensors und/oder in der Art eines Multikamera-Sensors ausgebildet ist.

15. Kraftfahrzeug, umfassend ein Dachmodul nach einem der Ansprüche 1 bis 14.

## Claims

1. A roof module (01) for forming a vehicle roof on a motor vehicle, the roof module (01) forming a structural unit which comprises integrated features enabling autonomous driving or semi-autonomous driving and which is placeable on top of a vehicle body shell, the roof module (01) comprising: a panel component (02) whose outer surface at least partially forms the roof skin (03) of the vehicle roof; at least two environment sensors (06, 07) configured to send and/or receive electromagnetic signals for detecting the vehicle surroundings and disposed below the roof skin (03) formed by the panel component (02); and at least one support module (05, 18, 23) on which the at least two environment sensors (06, 07) are mounted, **characterized in that** the support module (05, 18, 23) is attached to a frame element and has a base plate (15) on which two fastening mounts (17) are provided on both sides, one of the environment sensors (06, 07) being pre-installed in each fastening mount (17).

2. The roof module according to claim 1, **characterized in that** at least two environment sensors (06, 07) are jointly mounted on the support module.

3. The roof module according to claim 1 or 2, **characterized in that** the support module (05, 18, 23) has at least one fastening element configured to fasten the support module (05, 18, 23) to the roof module (01), the fastening element having an adjuster configured to adjust the relative position of the support module (05, 18, 23) on the roof module (01).

4. The roof module according to any one of claims 1 to 3, **characterized in that** at least a part of a heater and/or cooler (27) is attached to the support module (05, 18, 23).

5. The roof module according to claim 4, **characterized in that** the heater and/or cooler (27) comprises a cooling fan (11) and/or at least one cooling body (12, 26).

6. The roof module according to claim 4 or 5, **characterized in that** the heater and/or cooler comprises a liquid heating body or a liquid cooling body.

7. The roof module according to any one of claims 1 to 6, **characterized in that** an antenna module (22, 24) is additionally mounted on the support module (18, 23).

8. The roof module according to any one of claims 1 to 7, **characterized in that** a signaling element for signaling an autonomous operating mode of the motor vehicle is additionally mounted on the support module.

9. The roof module according to any one of claims 1 to 8, **characterized in that** the support module (05, 18, 23) comprises multiple fastening mounts (17, 19, 21) configured for pre-installing the environment sensors (06, 07) and/or the heater and/or cooler and/or the antenna module (22) and/or the signaling element thereon in a defined position relative to each other.

10. The roof module according to any one of claims 1 to 9, **characterized in that** the support module (05, 18, 23) with the pre-installed environment sensors is configured to be attached to a body shell element or to a panel component forming the roof skin of a vehicle or to a support plate (09).

11. The roof module according to any one of claims 1 to 10, **characterized in that** the support module (05, 18, 23) is disposed in a dry section (04) of the roof module (01), the dry section (04) being protected from moisture.

12. The roof module according to any one of claims 1 to 11, **characterized in that** the roof module (05, 18, 23) comprises a heat conducting element, the heat conducting element being configured to discharge heat from the support module (05, 18, 23), the heat conducting element preferably being configured in the manner of a metal sheet part, which is in particular configured in the manner of a support sheet (09).

13. The roof module according to any one of claims 1 to 12, **characterized in that** the support module (18, 23) comprises a stray light shade (20) between the two environment sensors.

14. The roof module according to any one of claims 1 to 13, **characterized in that** the environment sensor (06, 07) is configured in the manner of a lidar sensor and/or in the manner of a radar sensor and/or in the manner of a camera sensor and/or in the manner of a multi-camera sensor.

15. A motor vehicle comprising a roof module according to any one of claims 1 to 14.

## Revendications

1. Module de toit (01) pour former un toit de véhicule sur un véhicule automobile, le module de toit (01) formant une unité structurelle qui comprend des dispositifs intégrés permettant la conduite autonome ou la conduite semi-autonome et qui peut être placée sur une coque de véhicule, le module de toit (01) comprenant : un composant de surface (02) dont la surface extérieure forme au moins partiellement la peau de toit (03) du toit de véhicule ; au moins deux capteurs d'environnement (06, 07) configurés pour transmettre et/ou recevoir des signaux électromagnétiques afin de détecter l'environnement du véhicule et disposés au-dessous de la peau de toit (03) formée par le composant de surface (02) ; et au moins un module de support (05, 18, 23) sur lequel les au moins deux capteurs d'environnement (06, 07) sont fixés, **caractérisé en ce que** le module de support (05, 18, 23) est fixé à un élément de cadre et a une plaque de base (15) sur laquelle deux logements de fixation (17) sont disposés des deux côtés, l'un des capteurs d'environnement (06, 07) étant préinstallé dans chaque logement de fixation (17).

2. Module de toit selon la revendication 1, **caractérisé en ce qu'**au moins deux capteurs d'environnement (06, 07) sont fixés conjointement sur le module de support.

3. Module de toit selon la revendication 1 ou 2, **caractérisé en ce que** le module de support (05, 18, 23) a au moins un élément de fixation configuré pour fixer le module de support (05, 18, 23) au module de toit (01), l'élément de fixation ayant un moyen d'ajustement configuré pour ajuster la position relative du module de support (05, 18, 23) sur le module de toit (01).

4. Module de toit selon l'une quelconque des revendications 1 à 3, **caractérisé en ce qu'**au moins une partie d'un dispositif de chauffage et/ou de refroidissement (27) est fixée au module de support (05, 18, 23).

5. Module de toit selon la revendication 4, **caractérisé en ce que** le dispositif de chauffage et/ou de refroidissement (27) comprend un ventilateur de refroidissement (11) et/ou au moins un corps de refroidissement (12, 26).

6. Module de toit selon la revendication 4 ou 5, **caractérisé en ce que** le dispositif de chauffage et/ou de refroidissement comprend un corps de chauffage de liquide ou un corps de refroidissement de liquide.

7. Module de toit selon l'une quelconque des revendications 1 à 6, **caractérisé en ce qu'**un module d'antenne (22, 24) est fixé en outre au module de support (18, 23).

8. Module de toit selon l'une quelconque des revendications 1 à 7, **caractérisé en ce qu'**un élément de signalisation pour signaler un mode de fonctionnement autonome du véhicule automobile est fixé en outre au module de support.

9. Module de toit selon l'une quelconque des revendications 1 à 8, **caractérisé en ce que** le module de support (05, 18, 23) comprend plusieurs logements de fixation (17, 19, 21) configurés pour préinstaller sur lesquels les capteurs d'environnement (06, 07) et/ou le dispositif de chauffage et/ou de refroidissement et/ou le module d'antenne (22) et/ou l'élément de signalisation dans une position définie l'un par rapport à l'autre.

10. Module de toit selon l'une quelconque des revendications 1 à 9, **caractérisé en ce que** le module de support (05, 18, 23) avec les capteurs d'environnement préinstal-lés est configuré pour être fixé à un élément de coque ou à un composant de surface formant la peau de toit d'un véhicule ou à une plaque de support (09).

11. Module de toit selon l'une quelconque des revendications 1 à 10, **caractérisé en ce que** le module de support (05, 18, 23) est disposé dans une zone sèche (04) du module de toit (01), la zone sèche (04) étant protégée de l'humidité.

12. Module de toit selon l'une quelconque des revendications 1 à 11, **caractérisé en ce que** le module de toit (05, 18, 23) comprend un élément conducteur de chaleur, l'élément conducteur de chaleur étant configuré pour dissiper de la chaleur du module de support (05, 18, 23), l'élément conducteur de chaleur étant de préférence configuré à la manière d'une pièce en tôle, qui est configuré notamment à la manière d'une tôle de support (09).

13. Module de toit selon l'une quelconque des revendications 1 à 12, **caractérisé en ce que** le module de support (18, 23) comprend un diaphragme de lumière diffusée (20) entre les deux capteurs d'environnement.

14. Module de toit selon l'une quelconque des revendications 1 à 13, **caractérisé en ce que** le capteur d'environnement (06, 07) est configuré à la manière d'un capteur lidar et/ou à la manière d'un capteur radar et/ou à la manière d'un capteur de caméra et/ou à la manière d'un capteur multi-caméra.

15. Véhicule automobile comprenant un module de toit selon l'une quelconque des revendications 1 à 14.
